# EUROPEAN PATENT SPECIFICATION

(11) **EP 1 678 716 B1**
(45) Date of publication and mention of the grant of the patent: **04.04.2007**
(21) Application number: 04769574.7
(22) Date of filing: 06.10.2004
(51) Int. Cl.: G11B 23/03, G11B 23/00, G11B 33/12, G11B 33/04

(54) **AN ADAPTER DEVICE FOR OPTICAL MEMORY DISCS HAVING A REDUCED SIZE, AND A PROMOTIONAL ARTICLE COMPRISING SAID ADAPTER DEVICE**
ADAPTEREINRICHTUNG FÜR OPTISCHE SPEICHER-DATENTRÄGER MIT VERRINGERTER GRÖSSE UND WERBEARTIKEL MIT DER ADAPTEREINRICHTUNG
DISPOSITIF ADAPTATEUR POUR DISQUES DE STOCKAGE OPTIQUE DE TAILLE REDUITE ET ARTICLE PROMOTIONNEL COMPORTANT CE DISPOSITIF ADAPTATEUR

(30) Priority: 09.10.2003 IT TO20030796
(43) Date of publication of application: 12.07.2006
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 35260 Stadtallendorf (DE)
(72) Inventor: COSTANTINI, Maurizio, I-12051 Alba (Cuneo) (IT)
(74) Representative: Quinterno, Giuseppe
(86) International application number: PCT/IB2004/003264
(87) International publication number: WO 2005/036552

(56) References cited:
- EP-A2- 0 288 900
- EP-A2- 0 883 126
- US-A1- 2001 036 148
- PATENT ABSTRACTS OF JAPAN vol. 1998, no. 10, 31 August 1998 (1998-08-31) -& JP 10 125026 A (MATSUSHITA ELECTRIC IND CO LTD), 15 May 1998 (1998-05-15)
- PATENT ABSTRACTS OF JAPAN vol. 2000, no. 26, 1 July 2002 (2002-07-01) -& JP 2001 256745 A (TDK CORP), 21 September 2001 (2001-09-21)

## Description

This invention relates to an adapter device of the kind defined in the preamble of claim 1, which makes it possible to use an optical memory disc of the "compact-disc" type having dimensions (external diameter) smaller than a standard size or measure in a read and/or write device.

"Compact discs" have for many years predominated as high capacity memory media, initially as audio-digital media and more recently also as media for data in general.

Compact discs with the greatest variety of contents have been placed on the market for sale as separate commercial products, or as articles distributed in association with other commercial products to promote sales of the latter.

Normal compact discs are manufactured having a standard diameter of 12 cm (4.75"). Correspondingly, read-write devices have a recessed or depressed seat of precisely that standard diameter to receive these compact discs.

In addition to the principal seat having a diameter of 12 cm read-write devices generally have a further seat, which is further depressed, with a diameter of approximately 8 cm. This seat can be used to receive and locate 8 cm optical discs.

Standard read/write devices are not however able to "accept" compact discs having further reduced dimensions.

An adapter device of the initially defined kind is disclosed in EP-A-0 883 126. This prior art document discloses a solution aiming at reducing the size of an adapter ring for a video game CD having a reduced size (3.25 inch rather than the standard 4.75 inch), so that such a CD and the folded adapter ring can be attached to smaller books describing the game. This aim is achieved according to EP-A-0 883 126 by an adapter ring which is folded only once, along a diametrical fold line. In this way the folded adapter ring has a reduced size, and can be attached (together with the reduced-size CD) to a smaller game description book. The size of the folded adapter ring is however not too small, so that the adapter ring and the game description book can effectively protect the CD.

US-A-2001036148 discloses another adapter ring for small-seize CDs. The adapter ring (figure 2A) has three radial fold lines at 120° to one another.

JP-A-10125026 and the corresponding abstract disclose an adapter ring for small diameter disks. The adapter ring has two opposite, parallel chordal portion or sides, which alternate with curved portions or sides. Said chordal portions or sides somehow involve a reduction of size of the adapter ring, which is however outbalanced by the presence of a plurality of projections which protrude radially beyond the circumference to which belong said curved portions or sides of the adapter ring.

This invention has been developed in particular, but not exclusively, with a view to allowing the distribution and use of compact discs having reduced dimensions in comparison with the abovementioned standard values, for example having a diameter of approximately 5 cm and a capacity of the order of 10 Mbyte, in particular in association, as promotional articles, with commercial products of small size, in particular food products.

The invention has in particular been developed in order to permit the insertion of such a compact disc of somewhat smaller dimensions in combination with food products, either within the packages for the latter (for example buns, ice-cream or the like), or within the food product itself (for example hollow chocolate products or the like).

This and other objects will be achieved according to the invention through an adapter device, the salient features of which are defined in the appended claim 1.

Promotional articles comprising a compact disc of reduced size and an associated adapter device according to the provisions of claims 6 et sequenter likewise constitute an object of this invention.

Other advantages and characteristics of the present invention will become clear from the following detailed description which is given with reference to the appended drawings which are provided purely by way of non-limiting example and in which:
Figure 1 is a plan view of an optical disc of the "compact disc" type having an external diameter which is less than the standard diameter,
Figure 2 is a plan view of an adapter ring,
Figure 3 shows the adapter ring in Figure 2 in a folded condition,
Figure 4 is a plan view which shows the compact disc in Figure 1 and the folded adapter ring in a mutually juxtaposed relationship,
Figure 5 is a plan view showing a compact disc of reduced size in comparison with the standard dimensions inserted in an adapter device in the operating configuration,
Figure 6 shows an embodiment of an adapter ring according to the invention, and
Figure 7 shows the adapter ring in Figure 6 in the folded condition.

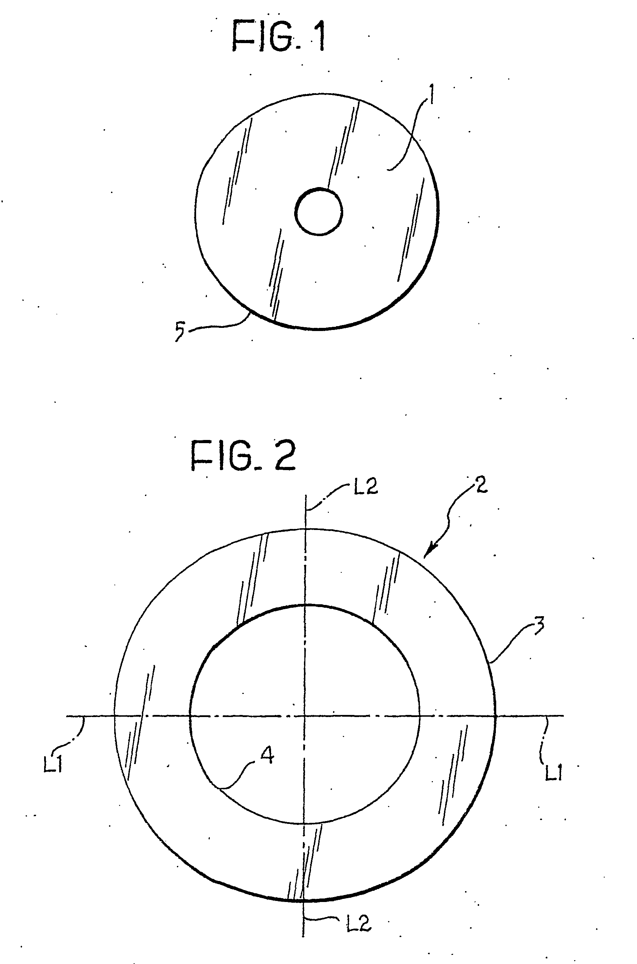

In Figure 1, 1 indicates as a whole a compact disc having an external diameter which is smaller than the standard diameter. This compact disc has for example an external diameter of 5.1 cm, an internal diameter of 1.5 cm and a thickness of 1.2 mm.

Compact discs 1 of reduced size may be manufactured for example by punching or cropping a compact disc of standard dimensions, in particular from a copy manufactured from a so-called "gold" copy.

In its simplest embodiment an adapter device essentially comprises an adapter ring such as that indicated by 2 in Figure 2 and the subsequent figures.

Adapter ring 2 is manufactured from a flexible material, in particular cardboard, having a thickness of preferably not more than 1 mm.

In the embodiment illustrated in Figures 2 to 5 the adapter ring has an outer perimeter 3 which corresponds to the outer circumference of a standard compact disc, for example having a diameter of 12 cm.

Adapter ring 2 also has an inner perimeter 4 which corresponds at least partly to the outer circumference 5 of compact disc 1.

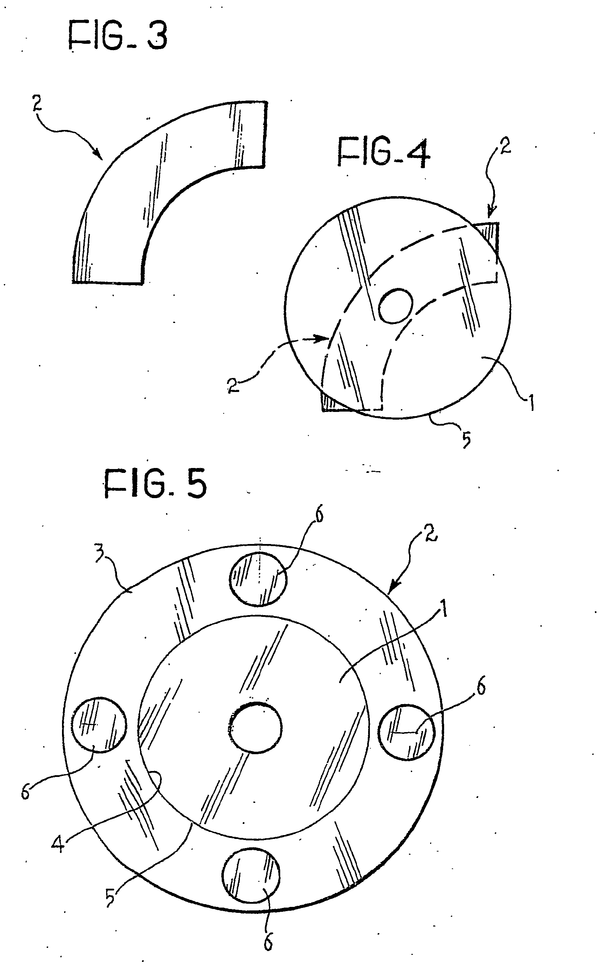

Adapter ring 2 is folded along predetermined fold lines L1, L2 (Figure 2) in such a way that when in the folded configuration (Figure 3) this ring 2 has a size which is similar to or smaller than the external diameter of compact disc 1 (Figure 4).

In the embodiment illustrated adapter ring 2 is essentially folded in two diametrical directions L1, L2 substantially at right angles to each other in such a way as to form four adjacent segments interconnected at the folds.

Adapter ring 2 is unfolded for use, so that it has the planar annular configuration shown in Figure 2.

Conveniently adapter ring 2 may be provided with adhesive reinforcing means which may be applied thereto in the unfolded operating configuration to prevent any tendency towards resilient return to the folded condition. These adhesive reinforcing means may comprise a self-stick ring (not illustrated) having dimensions which are smaller than or at the most the same as those of adapter ring 2, and which can be applied to one surface of the latter.

As an alternative, the aforesaid adhesive reinforcing means comprise a plurality of self-stick elements or tabs of small size, such as those indicated by 6 in Figure 5, which can be applied to the fold areas of adapter ring 2, straddling the fold lines.

For use the ring and the self-stick elements are conveniently provided with corresponding peelable coatings protecting their surfaces or the self-stick side.

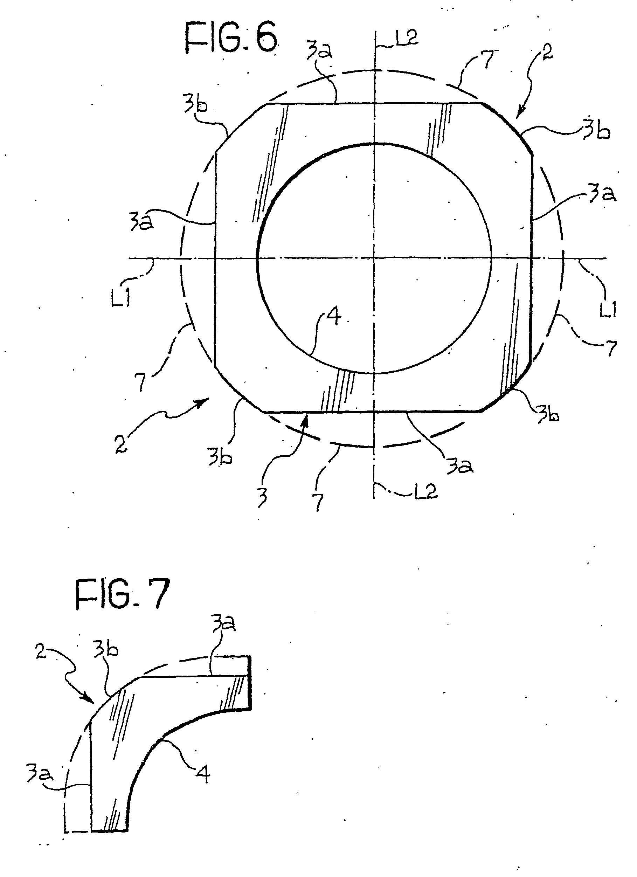

With reference to Figures 6 and 7, in an embodiment outer perimeter 3 of adapter ring 2 has a plurality of portions or sides 3a which extend essentially along the chords of a circumference 7 having a diameter corresponding to the external diameter of a standard compact disc. The perimeter of adapter disc in Figure 6 also has a plurality of curved portions of sides 3b corresponding to arcs of the aforesaid circumference 7. These curved sides 3b alternate with chordal sides 3a. The latter are at right angles to the diametral fold directions L1, L2 in pairs.

As may be appreciated by comparing Figure 7 with Figure 3, the embodiment of adapter disc 2 described above with reference to Figures 6 and 7 makes it possible to appreciably reduce the maximum dimension presented by this adapter disc in its folded condition.

As previously stated, conveniently the maximum dimension of the adapter disc in the folded condition is close to or possibly less than the diameter of compact disc 1. This feature is advantageous having regard for example to the possibility of inserting folded adapter ring 2 in a juxtaposed relationship with a compact disc 1 either within a pack for a food product, such as a bun, an ice-cream or the like, or possibly within the food product itself, such as a hollow chocolate product and the like.

Naturally, the principle of the invention remaining the same, the forms of embodiment and details of construction may be varied widely with respect to those described and illustrated, which have been given purely by way of example, without thereby departing from the scope of the invention as defined in the attached claims.

## Claims

1. Adapter device making it possible to use an optical memory disc of the "compact disc" type (1) having dimensions less than a standard dimension or measure,
comprising an adapter ring (2) of flexible material, in particular cardboard, having an outer perimeter (3) which at least partly corresponds to the outer circumference of a standard optical disc, and an inner perimeter (4) which at least partly corresponds to the outer circumference (5) of the said optical disc (1) of a size smaller than the standard size; the adapter ring (2) being folded along a predetermined diametrical fold line (L1, L2) in such a way that when in the folded configuration it presents one dimension which is close to or smaller than the external diameter of the said optical memory disc (1) of a size smaller than the standard size;
the adapter device being **characterised in that** the said adapter ring (2) is essentially folded along a plurality of diametrical directions (L1, L2) in such a way as to form a plurality of juxtaposed segments;
the outer perimeter (3) of the adapter ring (2) having a plurality of portions or sides (3a), which extend essentially along chords of a circumference (7) having a diameter corresponding to the external diameter of a standard optical disc, and a plurality of curved portions or sides (3b) corresponding to arcs of said circumference (7) having a diameter corresponding to the external diameter of a standard optical disc;
the chordal portions or sides (3a) and the curved portions or sides (3b) of the outer perimeter (3) of the adapter ring (2) alternating with each other; the chordal portions or sides (3a) being, in pairs, at right angles to the aforesaid diametrical fold directions (L1, L2).

2. Device according to claim 1, in which the outer perimeter (3) of the adapter ring (2) has four chordal portions or sides (3a).

3. Device according to any of the preceding claims, also comprising adhesive reinforcing means (6) adapted to be applied to the adapter ring (2) in its unfolded operating condition, and capable of preventing the tendency towards resilient return to the folded condition.

4. Device according to claim 3, in which the said adhesive reinforcing means comprise a self-stick ring which can be applied to one surface of the adapter ring (2).

5. Device according to claim 3, in which the said reinforcing adhesive means comprise a plurality of self-stick elements (6) of small size which can be applied over the fold zones in the adapter ring (2).

6. Article for distribution in association with a commercial product, in particular a food product (31), **characterised in that** it comprises an optical memory disc (1) of the "compact disc" type of a size smaller than a standard size or measure, and an associated adapter device (2; 6) according to one or more of the preceding claims.

7. Article according to claim 6 further comprising an enclosure (30) capable of containing within it the optical memory disc (1) and the adapter ring (2) in the folded configuration, in a juxtaposed arrangement.

## Patentansprüche

1. Adaptervorrichtung, die es möglich macht, eine optische Datenträgerscheibe der "Compact Disc"-Art (1) zu verwenden, deren Abmessungen kleiner als eine Standardabmessung oder ein Standardmaß sind,
umfassend einen Adapterring (2) aus flexiblen Material, insbesondere Karton, mit einem Außenrand (3), der mindestens teilweise dem Außenumfang einer standardmäßigen optischen Scheibe entspricht, und einem Innenrand (4), der mindestens teilweise dem äußeren Umfang (5) der optischen Datenträgerscheibe (1) mit einer im Vergleich zur Standardgröße kleineren Größe entspricht; wobei der Adapterring (2) entlang einer vorbestimmten diametralen Faltlinie (L1, L2) auf solche Weise gefaltet ist, das er im gefalteten Zustand eine Abmessung aufweist, die nahe am oder kleiner als der Außendurchmesser der optischen Datenträgerscheibe (1) mit einer im Vergleich zur Standardgröße kleineren Größe ist;
wobei die Adapatervorrichtung **dadurch gekennzeichnet ist, dass** der Adapterring (2) im Wesentlichen entlang einer Vielzahl von diametralen Richtungen (L1, L2) auf solche Weise gefaltet ist, dass er eine Vielzahl von angrenzenden Segmenten bildet;
wobei der Außenrand (3) des Adapterrings (2) eine Vielzahl von Abschnitten oder Seiten (3a) aufweist, die sich im Wesentlichen entlang der Sehnen einer Kreislinie (7) mit einem dem Außendurchmesser einer standardmäßigen optischen Scheibe entsprechenden Durchmesser erstreckt, und eine Vielzahl gekrümmter Abschnitte oder Seiten (3b) aufweist, die den Bögen der Kreislinie (7) mit einem dem Außendurchmesser einer standardmäßigen optischen Scheibe entsprechenden Durchmesser entsprechen;
wobei die chordalen Abschnitte oder Seiten (3a) und die gekrümmten Abschnitte oder Seiten (3b) des äußeren Rands (3) des Adapterrings (2) sich miteinander abwechseln; wobei die chordalen Abschnitte oder Seiten (3a) paarweise unter rechtem Winkel zu den genannten diametralen Faltrichtungen (L1, L2) stehen.

2. Vorrichtung nach Anspruch 1, bei der der Außenrand (3) des Adapterrings (2) vier chordale Abschnitte oder Seiten (3a) besitzt.

3. Vorrichtung nach einem der vorangehenden Ansprüche, ebenso eine Klebeverstärkung (6), umfassend, die zum Anbringen auf den Adapterring (2) in seinem entfalteten Betriebszustand geeignet ist und in der Lage ist, die Neigung zur elastischen Rückkehr in den gefalteten Zustand zu verhindern.

4. Vorrichtung nach Anspruch 3, bei der die Klebeverstärkung einen selbsthaftenden Ring umfasst, der an einer Oberfläche des Adapterrings (2) angebracht werden kann.

5. Vorrichtung nach Anspruch 3, bei der die Klebeverstärkung eine Vielzahl von selbsthaftenden Elementen (6) geringer Größe umfasst, die über den Faltzonen im Adapterring (2) angebracht werden können.

6. Artikel für den Vertrieb zusammen mit einem kommerziellen Produkt, insbesondere einen Lebensmittelprodukt (31), **dadurch gekennzeichnet, dass** er eine optische Datenträgerscheibe (1) der "Compact Disc"-Art mit einer im Vergleich zu einer Standardgröße oder einem Standradmaß kleineren Größe sowie eine zugehörige Adaptervorrichtung (2, 6) nach einem oder mehreren der vorangegangenen Ansprüche umfasst.

7. Artikel nach Anspruch 6, weiter eine Umhüllung (30) umfassend, die in der Lage ist, in ihr die optische Datenträgerscheibe (1) und den Adapterring (2) im gefalteten Zustand in einer angrenzenden Anordnung zu enthalten.

## Revendications

1. Dispositif d'adaptateur permettant d'utiliser un disque à mémoire optique du type «disque compact » (1) ayant des dimensions inférieures à une dimension ou mesure standard,
comprenant un anneau adaptateur (2) de matériau flexible, en particulier du carton, ayant un périmètre externe (3) qui, au moins partiellement, correspond à la circonférence externe d'un disque optique standard, et un périmètre interne (4) qui, au moins partiellement, correspond à la circonférence externe (5) dudit disque optique (1) d'une taille inférieure à la taille standard ;
l'anneau adaptateur (2) étant plié le long d'une ligne de pliage diamétrale prédéterminée (L1, L2) de sorte que lorsqu'il est dans la configuration pliée, il présente une dimension qui est proche de ou inférieure au diamètre externe dudit disque à mémoire optique (1) de plus petite taille que la taille standard ;
le dispositif d'adaptateur étant **caractérisé en ce que** ledit anneau adaptateur (2) est essentiellement plié le long d'une pluralité de directions diamétrales (L1, L2) afin de former une pluralité de segments juxtaposés ;
le périmètre externe (3) de l'anneau adaptateur (2) ayant une pluralité de parties ou côtés (3a) qui s'étend essentiellement le long des cordes d'une circonférence (7) ayant un diamètre correspondant au diamètre externe d'un disque optique standard, et une pluralité de parties ou côtés incurvés (3b), correspondant aux arcs de ladite circonférence (7) ayant un diamètre correspondant au diamètre externe d'un disque optique standard ;
les parties ou côtés à la corde (3a) et les parties ou côtés incurvées (3b) du périmètre externe (3) de l'anneau adaptateur (2) alternant les unes par rapport aux autres ; les parties ou côtés à la corde (3a) étant, par paires, en angle droit par rapport aux directions de pliage diamétrales (L1, L2) mentionnées précédemment.

2. Dispositif selon la revendication 1, dans lequel le périmètre externe (3) de l'anneau adaptateur (2) a quatre parties ou côtés à la corde (3a).

3. Dispositif selon l'une quelconque des revendications précédentes, comprenant également des moyens de renforcement adhésifs (6) adaptes pour être appliqués sur l'anneau adaptateur (2) dans sa condition de fonctionnement dépliée et capable d'empêcher la tendance à un retour élastique dans la condition pliée.

4. Dispositif selon la revendication 3, dans lequel lesdits moyens de renforcement adhésifs comprennent un anneau autocollant qui peut être appliqué sur une surface de l'anneau adaptateur (2).

5. Dispositif selon la revendication 3, dans lequel lesdits moyens adhésifs de renforcement comprennent une pluralité d'éléments autocollants (6) de petite taille qui peuvent être appliqués sur les zones de pli dans l'anneau adaptateur (2).

6. Article destiné à être distribué en association avec un produit commercial, en particulier un produit alimentaire (31), **caractérisé en ce qu'**il comprend un disque à mémoire optique (1) du type «disque compact» d'une taille plus petite à une taille ou mesure standard, et un dispositif d'adaptateur (2 ; 6) associé selon une ou plusieurs des revendications précédentes.

7. Article selon la revendication 6, comprenant en outre un boîtier (30) capable de contenir à l'intérieur de celui-ci le disque à mémoire optique (1) et l'anneau adaptateur (2) dans la configuration pliée, dans un agencement juxtaposé.
